# EUROPEAN PATENT APPLICATION

(11) **EP 2 262 274 A2**
(43) Date of publication of application: **15.12.2010**
(21) Application number: 10153747.0
(22) Date of filing: 16.02.2010
(51) Int. Cl.: H04N 17/02, H04N 5/57, H04N 5/16

(54) **Display apparatus and method**

(30) Priority: 10.06.2009 KR 20090051594
(71) Applicant: Samsung Electronics Co., Ltd., Suwon-si, Gyeonggi-do 442-742 (KR)
(72) Inventor: Han, Jea-hee, Gyeonggi-do (KR)
(74) Representative: Robinson, Ian Michael

(57) **Abstract**

A display apparatus includes: a video processor which performs calibration; a signal generator which generates a signal; and a controller which controls the signal generator to generate an analog signal corresponding to a predetermined direct current voltage when performing the calibration, and controls the video processor to convert the analog signal into the digital signal and to adjust the digital signal to have a same value as a reference value. The signal input for calibration is achieved in a board controllable by a microcomputer, so that the board itself can automatically perform the calibration with regard to various kinds of signals without connection of an external device.

## Description

### BACKGROUND OF INVENTION

### 1. Field of Invention

Apparatuses and methods consistent with the present invention relate to a display apparatus and method, and more particularly, to a display apparatus and method in which signals input for calibration are generated by a circuit board controllable by a microcomputer, so that the circuit board itself can automatically perform the calibration with regard to various kinds of signals without connection of an external device.

### 2. Description of the Related Art

A display apparatus performs analog to digital conversion (ADC) calibration to adjust gain and offset levels of each channel input in order to decrease physical scattering of the offset and the gain for sampling each channel (three channels of R, G and B or three channels of Y, U and V) at the ADC.

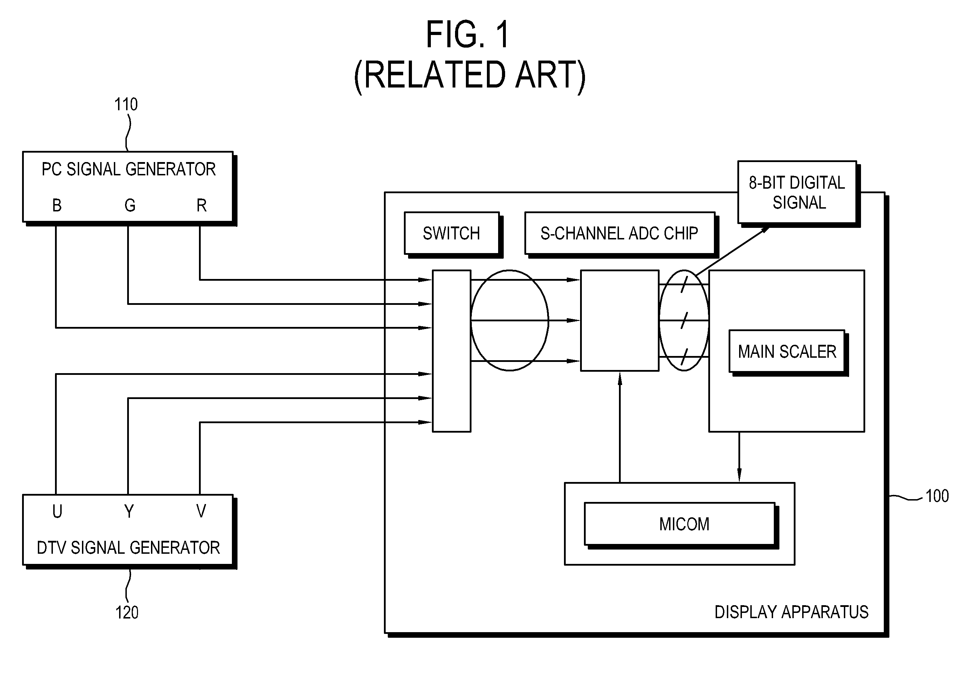

FIG. 1 is a block diagram for explaining the existing calibration operation.

A personal computer (PC) signal generator 110 generates R, G and B patterns as standard signals (0mV ∼ 700mV). A digital television (DTV) signal generator 120 generates Y, U and V patterns as standard signals. In this case, the PC signal generator 110 and the DTV signal generator 120 are placed outside of a display apparatus 100.

The display apparatus 100 performs the calibration with reference to the patterns output from the PC signal generator 110 and the DTV signal generator 120. For example, the detailed calibration to a PC signal is performed as follows.

During the calibration, a black pattern for adjusting the offset, and a white pattern for adjusting the gain are needed. If a signal having a standard level of 0mV ∼ 700mV is input from the PC signal generator 110, the display apparatus 100 obtains digital sampling minimum and maximum values for the black and white patterns. The display apparatus 100 adjusts the offset of the ADC in order to set the digital sampling minimum value to a target minimum value of "0." Then, the display apparatus 100 ascertains the digital sampling value for the black pattern again, and sets the adjusted value of the offset if the digital sampling minimum value for the black pattern satisfies the target minimum value.

Further, the display apparatus 100 adjusts the gain of the ADC so as to set the digital sampling maximum value to a target maximum value of "255." Then, the display apparatus 100 ascertains the digital sampling maximum value for the white pattern again, and sets the adjusted value of the gain if the digital sampling maximum value for the white pattern satisfies the target maximum value.

Such adjustments of the offset and the gain are performed according to the respective channels (e.g., R, G and B channels or Y, U and V channels).

Conventionally, when the calibration is performed to the PC signal and the DTV signal, a calibration line is connected to a PC D-sub cable and a DTV component jack is connected to the display apparatus and timing and patterns prepared for a PC mode and a DTV mode are applied to the PC signal generator and the DTV signal generator, respectively. When the PC signal and the DTV signal are output from the PC signal generator and the DTV signal generator, the display apparatus performs the calibration with regard to the corresponding signal. After calibration is completed, the D-sub cable and the DTV component jack are disconnected from the display apparatus, thereby completing the calibration process.

Thus, it is necessary for someone to directly connect the external device to the display apparatus. Further, an adapter board has to be added to a signal cable in order to perform the calibration, but the adapter board causes signal distortion (e.g., overshoot and undershoot), thereby deteriorating the quality of the calibration.

### SUMMARY OF THE INVENTION

According to the present invention there is provided an apparatus and method as set forth in the appended claims. Other features of the invention will be apparent from the dependent claims, and the description which follows.

The present invention provides a display apparatus and method in which signals input for calibration are generated by a circuit board controllable by a microcomputer, so that the board itself can automatically perform the calibration with regard to various kinds of signals without connection of an external device.

An aspect of the present invention provides a display apparatus including: a video processor which performs calibration; a signal generator which generates a signal; and a controller which controls the signal generator to generate an analog signal corresponding to a predetermined direct current (DC) voltage when performing the calibration, and controls the video processor to convert the analog signal into a digital signal and to adjust the digital signal to have a same value as a reference value.

The predetermined DC voltage may include at least one of DC voltages representing black and white.

The controller may control the video processor to adjust gain and/or offset of the digital signal on the basis of an analog signal corresponding to the DC voltage representing the black and/or the white.

The predetermined DC voltage may include at least one of a minimum voltage and a maximum voltage in a waveform of the analog signal.

The signal generator may generate an analog signal corresponding to the predetermined DC voltage by a pulse width modulation (PWM) method.

The controller may control the video processor to finish the calibration if the digital signal is adjusted to have the same value as the reference value, but perform the calibration again if the digital signal is adjusted not to have the same value as the reference value.

The controller may control the video processor to output a message of failed calibration if the calibration is repeated equal to or more than a previously set number of times.

Another aspect of the present invention provides a display method including: generating an analog signal corresponding to a predetermined DC voltage; converting the analog signal into a digital signal to be compared with a reference value; and adjusting the digital signal to have a same value as the reference value to perform calibration.

The predetermined DC voltage may include at least one of DC voltages representing black and white.

Gain and/or offset of the digital signal may be adjusted on the basis of the analog signal corresponding to the at least one of DC voltage voltages representing black and white.

The predetermined DC voltage may include at least one of a minimum voltage and a maximum voltage in a waveform of the analog signal.

An analog signal corresponding to the predetermined DC voltage may be generated by a pulse width modulation (PWM) method.

The calibration may be finished if the digital signal is adjusted to have the same value as the reference value, but the calibration may be performed again if the digital signal is adjusted not to have the same value as the reference value.

A message of failed calibration is output if the calibration is repeated equal to or more than a previously set number of times.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:

FIG. 1 is a block diagram for explaining conventional calibration;

FIG. 2 is a block diagram illustrating a configuration of a display apparatus according to an exemplary embodiment of the present invention;

FIGS. 3A and 3B are diagrams illustrating waveforms of R, G and B pattern signals, and Y, U and V pattern signals, respectively;

FIG. 4 is a flowchart of performing calibration according to an exemplary embodiment of the present invention; and

FIG. 5 is a flowchart of performing calibration according to another exemplary embodiment of the present invention.

### DETAILED DESCRIPTION OF EXEMPLARY EMBODIMENTS

Exemplary embodiments of the present invention will be described in detail with reference to accompanying drawings so as to be easily realized by a person having ordinary knowledge in the art. The present invention may be embodied in various forms without being limited to the embodiments set forth herein. Descriptions of well-known parts are omitted for clarity, and like reference numerals refer to like elements throughout.

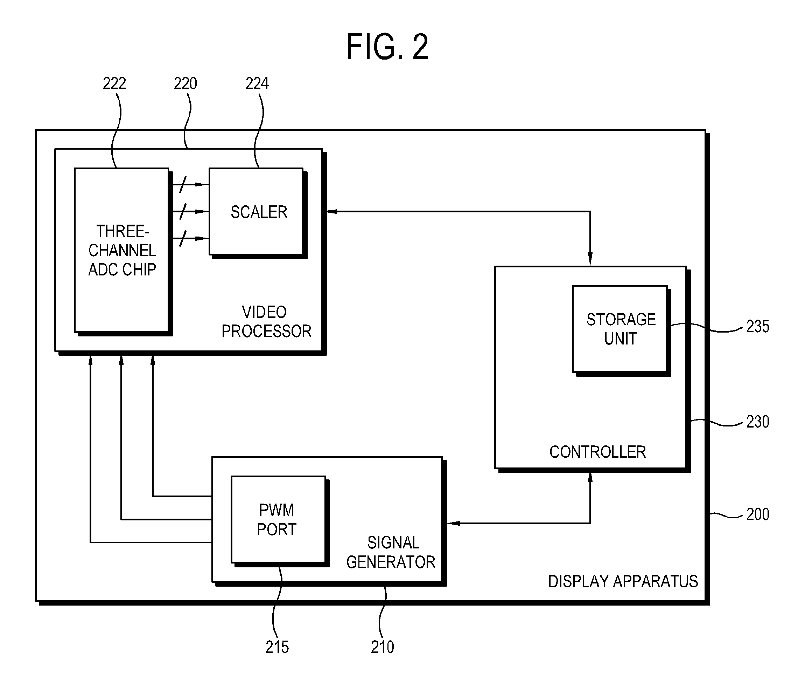

FIG. 2 is a block diagram illustrating a configuration of a display apparatus according to an exemplary embodiment of the present invention.

A display apparatus 200 according to an exemplary embodiment of the present invention may include, but is not limited to, a digital TV, a desktop computer, a notebook computer, a monitor, etc. Further, an electronic device may be used as the display apparatus 200 according to an exemplary embodiment of the present invention as long as it can display an image and perform analog to digital conversion (ADC).

The display apparatus 200 according to an exemplary embodiment of the present invention may include a signal generator 210, a video processor 220 and a controller 230.

The signal generator 210 generates a signal. Specifically, the signal generator 210 may generate an analog signal corresponding to a predetermined DC voltage. In this exemplary embodiment, the predetermined DC voltage may include at least one of DC voltages representing black and white. For example, the predetermined DC voltage may include at least one of 0.1V representing black and 0.6V representing white. According to another exemplary embodiment, the predetermined DC voltage may include at least one of a maximum voltage and a minimum voltage in a waveform of the analog signal. For example, the predetermined DC voltage may include at least one of a minimum voltage of 0mV and a maximum voltage of 700mV.

Further, the signal generator 210 generates R, G and B pattern signals in the state that the display apparatus 200 operates in a PC mode, and generates Y, U and V pattern signals in the state that the display apparatus 200 operates in a DTV mode.

In this case, the signal generator 210 may output the generated analog signal to the video processor 220.

The signal generator 210 may generate an analog signal corresponding to a predetermined DC voltage by a pulse width modulation (PWM) method. The signal generator 210 may include a PWM port 215.

The video processor 220 may perform calibration. Specifically, the video processor 220 converts the analog signal output from the signal generator 210 into a digital signal, and adjusts the digital signal to have the same value as a reference value. According to an exemplary embodiment of the present invention, the video processor 220 may adjust an offset and/or a gain of the digital signal on the basis of the analog signal corresponding to the DC voltage representing black and/or white.

The video processor 220 may include a three-channel ADC chip 222 and a scaler 224. The three-channel ADC chip 222 converts the analog signals input according to channels into 8-bit digital signals having values of 0 ∼ 255. The values of the converted digital signals may be stored in an internal register (not shown) of the scaler 224. The scaler 224 adjusts the values stored in the internal register to be equal to the reference value.

Meanwhile, the video processor 220 finishes the calibration when the value of the digital signal is equal to the reference value, but performs the calibration again if the value of the digital signal is not equal to the reference value.

Further, the video processor 220 may output a message of failed calibration if the calibration is performed equal to or more than a preset number of times. This message may be output in the form of at least one of an on screen display (OSD) and a voice.

The video processor 220 may be provided by, for example, but not limited to, a liquid crystal display (LCD), an organic light emitting diode (OLED), a plasma display panel (PDP), etc.

The controller 230 may control the signal generator 210 to generate the analog signal corresponding to a predetermined DC voltage when performing the calibration. When the display apparatus 200 operates in the PC mode, calibration for the PC signal is needed. On the other hand, when the display apparatus 200 operates in the DTV mode, calibration for the DTV signal is needed. Thus, the controller 230 controls the signal generator 210 to generate the R, G and B pattern signals when the display apparatus 200 operates in the PC mode, and the Y, U and V pattern signals when the display apparatus 200 operates in the DTV mode.

Also, when performing the calibration, the controller 230 may control the video processor 220 to convert the analog signal generated by the signal generator 210 into the digital signal and to adjust the digital signal to have the same value as the reference value. Specifically, the controller 230 compares the reference value stored in a storage unit 235 with the value of the converted digital signal stored in the internal register of the scaler 224. Then, the controller 230 controls the video processor 220 to adjust the converted digital signal to have the same value as the reference value.

According to an exemplary embodiment of the present invention, the reference values may be set with values obtained by converting the analog signals corresponding to the DC voltages representing black and white into the digital values. For example, the reference values may be set by a value (e.g., 0X01) obtained by converting 0.1V representing black into a digital value, and a value (e.g., 0X06) obtained by converting 0.6V representing white into a digital signal. In this case, the controller 230 may control the video processor 220 to adjust the gain and/or the offset of the digital signal on the basis of the analog signal corresponding to the DC voltage representing black and/or white.

According to another exemplary embodiment of the present invention, the reference values may be set with values obtained by converting the minimum and maximum voltages in the waveform of the analog signal into the digital signals. For example, the reference values may be set by a value (e.g., 0X00) obtained by converting the minimum voltage of 0mV into a digital signal, and a value (e.g., 0X67) obtained by converting the maximum voltage of 700mV into a digital signal.

Meanwhile, the controller 230 may control the video processor 220 to finish the calibration when the digital signal is adjusted to have the same value as the reference value, but perform the calibration again if the digital signal is adjusted not to have the same value as the reference value.

Further, the controller 230 may control the video processor 220 to output a message of failed calibration if the calibration is performed equal to or more than a preset number of times.

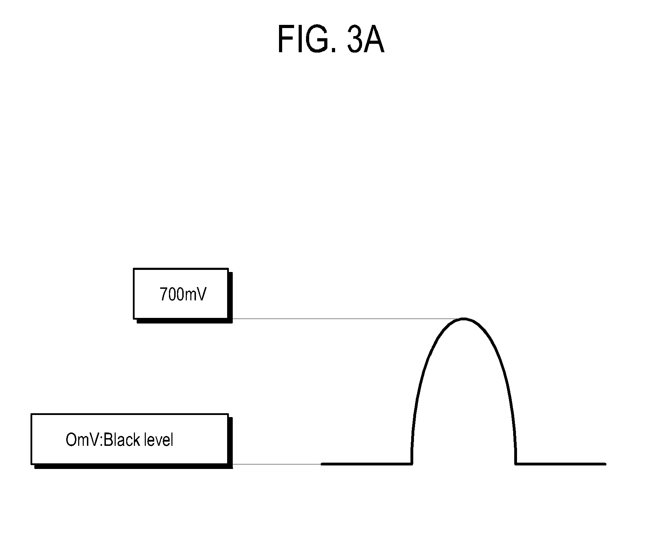

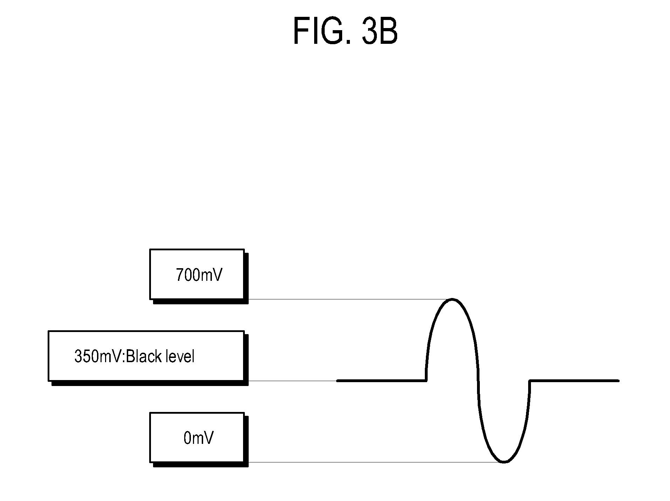

FIG. 3A is a diagram illustrating waveforms of R, G and B pattern signals and FIG. 3B is a diagram illustrating Y, U and V pattern signals.

In the case of the calibration for the PC signal, as shown in (a), the R, G and B pattern signals have a level of 0mV ∼ 700mV with respect to the ground, and this level is used in performing the calibration.

In the case of the calibration for the DTV signal, as shown in (a), the Y pattern signal has a level of 0mV ∼ 700mV with respect to the ground, and this level is used in performing the calibration. However, as shown in (b), the U and V pattern signals have an intermediate level (128 digital) of 350mV, and this level is used in performing the calibration.

Thus, the calibration is independently performed in the PC mode and the DTV mode.

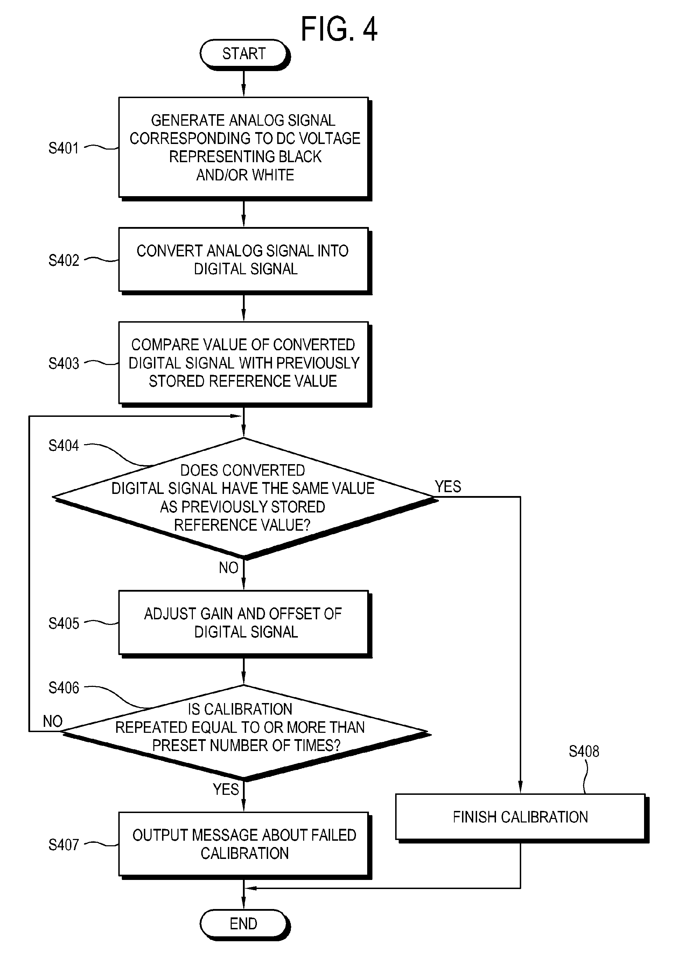

FIG. 4 is a flowchart of performing calibration according to an exemplary embodiment of the present invention.

According to an exemplary embodiment of the present invention, a predetermined DC voltage generated by the signal generator 210 may include at least one of DC voltages representing black and white. In this case, the reference value previously set to adjust the gain and the offset may be set with a value obtained by converting an analog signal corresponding to the DC voltage representing black and white into a digital signal.

The display apparatus 200 generates an analog signal corresponding to the DC voltages representing black and/or white in order to perform the calibration (S401). For example, the display apparatus 200 may output the DC level of 0.1V representing black and the DC level of 0.6V representing white through the PWM port. The display apparatus 200 converts the generated analog signal into the digital signal (S402).

The display apparatus 200 compares the value of the converted digital signal with the previously stored reference value (S403). For example, the previously stored reference value may be set with a value (e.g., 0X01) obtained by converting 0.1V representing black into a digital signal and with a value (e.g., 0X06) obtained by converting 0.6V representing white into a digital signal.

The display apparatus 200 determines whether the value of the converted digital signal is equal to the previously stored reference value (S404). If it is determined that the value of the converted digital signal is equal to the previously stored reference value (S404-Y), the display apparatus 200 finishes the calibration (S408). In this case, the display apparatus 200 outputs a message of completed calibration, and informs a user that the calibration is successful.

If it is determined that the value of the converted digital signal is different from the previously stored reference value S404-N), the display apparatus 200 adjusts the gain and the offset of the digital signal (S405). When adjusting the offset, the display apparatus 200 adjusts a digital code converted from 0.1V representing black to be equal to the reference value. When adjusting the gain, the display apparatus 200 adjusts the digital code converted from 0.1V representing black and the digital code converted from 0.6V representing white to be equal to the reference value.

The display apparatus 200 determines whether the calibration is repeated equal to or more than a predetermined number of times (S406). If it is determined that the calibration is repeated equal to or more than a predetermined number of times (S406-Y), the display apparatus 200 outputs a message of failed calibration in the form of the OSD (S407). In this case, the message of the failed calibration may be output together with a circuit board check message.

If it is determined that the calibration is repeated less than a predetermined number of times (S406-N), the display apparatus 200 returns to the operation S404, thereby repetitively performing the calibration.

Thus, the display apparatus according to an exemplary embodiment of the present invention internally and directly generates an analog signal corresponding to a predetermined DC voltage, thereby performing the calibration. Accordingly, the display apparatus can perform the calibration by itself even through it does not store any certain pattern for the calibration.

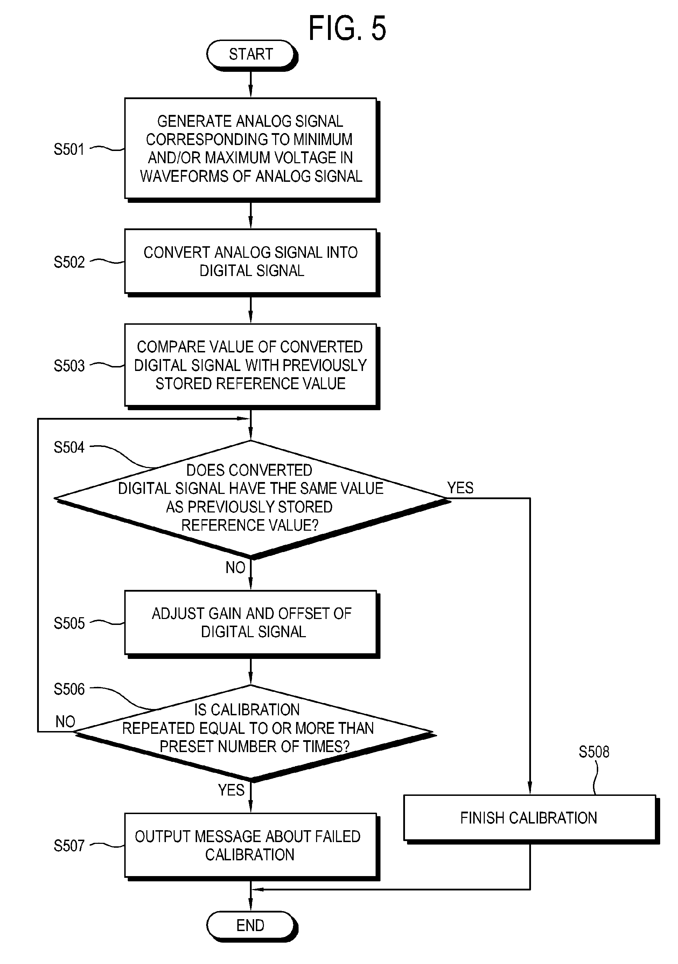

FIG. 5 is a flowchart of performing calibration according to another exemplary embodiment of the present invention.

In this embodiment, a predetermined DC voltage generated by the signal generator 210 may include at least one of a minimum voltage and a maximum voltage in the waveform of the analog signal.

In this case, a reference value previously set to adjust gain and offset may be set with a value obtained by converting the minimum and maximum voltages in the waveform of the analog signal into a digital signal.

The display apparatus 200 generates an analog signal corresponding to the minimum voltage and/or the maximum voltage in the waveform of the analog signal so as to perform the calibration (S501). For example, the display apparatus 200 may output a minimum DC voltage of 0mV and a maximum DC voltage of 700mV through the PWM port.

The display apparatus 200 converts the generated analog signal into the digital signal (S502).

The display apparatus 200 compares the value of the converted digital signal with the previously stored reference value (S503) For example, the previously stored reference value may be set with a value (e.g., 0X00) obtained by converting the minimum voltage of 0mV into a digital signal and with a value (e.g., 0X67) obtained by converting the maximum voltage of 700mV into a digital signal.

If it is determined that the value of the converted digital signal is different from the previously stored reference value (S504-N), the display apparatus 200 adjusts the gain and the offset of the digital signal (S505). When adjusting the offset, the display apparatus 200 adjusts a digital code converted from the minimum voltage of 0mV to be equal to the reference value. When adjusting the gain, the display apparatus 200 adjusts the digital code converted from the minimum voltage of 0mV and the digital code converted from the maximum voltage of 700mV to be equal to the reference values, respectively.

As described above, manpower and specific equipment are not separately needed for calibration, and the calibration is easily performed with regard to various kinds of signals such as high definition multimedia interface (HDMI)/PC/component(Comp)/audio & video (AV) signals or the like.

Also, the display can perform the calibration by itself at its initial operation, and there is no separate process of connecting calibration lines.

Although a few preferred embodiments have been shown and described, it will be appreciated by those skilled in the art that various changes and modifications might be made without departing from the scope of the invention, as defined in the appended claims.

## Claims

1. A display apparatus comprising:
a video processor which performs calibration;
a signal generator which generates a signal; and
a controller which controls the signal generator to generate an analog signal corresponding to a predetermined direct current voltage when performing the calibration, and controls the video processor to convert the analog signal into a digital signal and to adjust the digital signal to have a same value as a reference value.

2. The display apparatus according to claim 1, wherein the predetermined direct current voltage comprises at least one of direct current voltages representing black and white.

3. The display apparatus according to claim 2, wherein the controller controls the video processor to adjust at least one of gain and offset of the digital signal on the basis of the analog signal corresponding to the at least one of direct current voltage representing black and white.

4. The display apparatus according to claim 1, wherein the predetermined direct current voltage comprises at least one of a minimum voltage and a maximum voltage in a waveform of the analog signal.

5. The display apparatus according to claim 1, wherein the signal generator generates the analog signal corresponding to the predetermined direct current voltage by a pulse width modulation (PWM) method.

6. The display apparatus according to claim 1, wherein the controller controls the video processor to finish the calibration if the digital signal is adjusted to have the same value as the reference value, and to perform the calibration again if the digital signal is adjusted not to have the same value as the reference value.

7. The display apparatus according to claim 6, wherein the controller controls the video processor to output a message of failed calibration if the calibration is repeated equal to or more than a previously set number of times.

8. A display method comprising:
generating an analog signal corresponding to a predetermined direct current voltage;
converting the analog signal into a digital signal to be compared with a reference value; and
adjusting the digital signal to have the same value as the reference value to perform calibration.

9. The display method according to claim 8, wherein the predetermined direct current voltage comprises at least one of direct current voltages representing black and white.

10. The display method according to claim 9, wherein at least one of gain and offset of the digital signal are adjusted on the basis of the analog signal corresponding to the at least one direct current voltages representing black and white.

11. The display method according to claim 8, wherein the predetermined direct current voltage comprises at least one of a minimum voltage and a maximum voltage in a waveform of the analog signal.

12. The display method according to claim 8, wherein the analog signal corresponding to the predetermined direct current voltage is generated by a pulse width modulation (PWM) method.

13. The display method according to claim 8, wherein the calibration is finished if the digital signal is adjusted to have a same value as the reference value, and the calibration is performed again if the digital signal is adjusted not to have the same value as the reference value.

14. The display method according to claim 13, wherein a message of failed calibration is output if the calibration is repeated equal to or more than a previously set number of times.
